# DEMANDE DE BREVET EUROPEEN

(11) **EP 0 736 990 A1**
(43) Date de publication de la demande: **09.10.1996**
(21) Numéro de dépôt: 96400530.0
(22) Date de dépôt: 14.03.1996
(51) Int. Cl.: H04L 25/02, H01R 13/66

(54) **Architecture de bus de communication du type à couplage magnétique, notamment pour des applications aéroportées**

(30) Priorité: 03.04.1995 FR 9503878
(71) Demandeur: FRAMATOME CONNECTORS INTERNATIONAL, 92400 Courbevoie (FR)
(72) Inventeur: Dohan, Yves, F-75012 Paris (FR); Boussairy, Mekki, F.72560 CHANGE (FR); Leger, Patrick, F-72230 MULSANNE (FR)
(74) Mandataire: Lepercque, Jean

(57) **Abrégé**

L'architecture selon l'invention concerne un bus (BCM) à couplage magnétique. Le bus est organisé en sections (Sᵢ₋₁, Sᵢ). Les parties "coupleurs" (Bᵢ) sont dissociées des parties "câbles" (C_{b,i-1}, C_{b,i}) du bus (B_{CM}) Les coupleurs (Bᵢ) eux-mêmes comprennent un module de couplage magnétique (1), constitué d'éléments passifs, et un module d'interface (2), comprenant des circuits électroniques d'interface entre le module de couplage magnétique (1) et les abonnés (Uᵢ), via des câbles supplémentaires (C_{a,i}).

Selon une première variante, les modules (1, 2) sont constitués de boîtiers simples (10, 20), utilisés tel quel ou mis en cascade. Selon un second mode de réalisation, les modules sont multiples et disposés dans des boîtiers comprenant des connecteurs rectangulaires pour l'interconnexion entre boîtiers.

## Description

L'invention concerne une architecture de bus de communication du type à couplage magnétique.

Elle s'applique notamment aux domaines aéronautique et aérospatial.

De nombreux types de bus sont connus.

On peut citer, à titre d'exemples non exhaustifs, les bus de type série ou parallèle, véhiculant des signaux numériques entre les différentes unités d'un dispositif de traitement de données, tel qu'un micro-ordinateur ; les bus reliant ces dispositifs de traitements de données entre eux, en étoile, en boucle, etc. ; ou encore des boucles magnétiques.

Il existe également des normes ou standards de fait décrivant ces bus : "ETHERNET", "TOKEN RING", "IEEE", etc.

Quelque soit le type de bus considéré, le besoin se fait sentir de transmettre des quantités de données de plus en plus importantes, ce qui implique des fréquences de transmission élevées. L'évolution des technologies permet effectivement d'atteindre les fréquences élevées requises, couramment de 10 à 100 MHz.

Or, il est bien connu qu'à ces fréquences l'impédance caractéristique de la ligne de transmission que forme le bus doit être constante, ce tout au long de la ligne. Dans le cas contraire, on constate la formation de réflexions parasites et d'ondes stationnaires. Un des paramètres important caractérisant une ligne de transmission, outre son impédance caractéristique, est le taux d'ondes stationnaires ("TOS"). Ce phénomène est générateur, notamment, de pertes énergétiques, et peut causer des perturbations graves : signaux parasites.

Il est également nécessaire de protéger les bus des interférences magnétiques régnant dans le milieu ambiant (compatibilité électromagnétique). La protection doit s'étendre aussi aux couplages capacitifs parasites, à la protection contre les radiations, etc.

Dans les domaines précités, ces perturbations, magnétiques ou capacitives, peuvent être très importantes, d'autant plus que ces bus s'étendent couramment sur plusieurs dizaines de mètres. En outre, les bus sont soumis à des conditions adverses : larges variations de température, humidité, vibration, etc.

Les systèmes électroniques utilisés en avionique moderne sont très complexes : appareils de mesures variés, appareils de commande, etc. On comprend aisément que la fiabilité soit un paramètre majeur, que ce soit d'un point de vue "intégrité" (non-corruption des données transmises) ou "disponibilité" : permanence du service, même en cas de perturbations extérieures importantes (coup de foudre sur l'avion, par exemple). Des perturbations dans la transmission des signaux sur les bus peuvent en effet conduire à des situations catastrophiques.

Il a été proposé, pour ce type d'applications, un bus faisant appel au couplage magnétique. En général, le bus comporte une "épine dorsale" à laquelle sont reliés divers sous-systèmes d'appareillages électroniques qui peuvent communiquer avec un système central, voire communiquer entre eux. Une norme existe d'ailleurs pour ce type d'application, il s'agit de la norme "ARINC 629".

Dans l'Art Connu, plusieurs architectures ont été divulguées.

La demande de brevet européen EP-A-0 053 638 (THE BOEING COMPANY) divulgue un bus de communication mettant en oeuvre un bus dit "en mode courant" faisant appel à une paire torsadée.

Les fréquences mises en oeuvre sont seulement de quelques MHz. Le comportement du bus décrit est donc plus près du domaine basse fréquence que du domaine haute fréquence.

La demande de brevet européen EP-A-0 282 102 (THE BOEING COMPANY) divulgue un bus à couplage magnétique mettant en oeuvre une paire torsadée. Les signaux utilisés sont de type "doublets" impulsionnels (voir plus particulièrement la figure 14 de cette demande de brevet : signaux DT), c'est-à-dire ayant une composante positive et une composante négative. Ces impulsions correspondent à des transitions des signaux de données.

La demande de brevet européen EP-A-0 282 101 (THE BOEING COMPANY) divulgue un bus similaire et plus particulièrement la partie coupleur de ce bus et l'électronique associée.

Il a été également proposé des coupleurs amovibles que l'on peut disposer à demeure ou temporairement, à un endroit quelconque du bus. Ces coupleurs s'apparentent, dans leur principe de fonctionnement, aux dispositifs du type "pince ampèremétrique". De tels coupleurs sont divulgués, notamment, par les deux documents brevets suivants :
- le brevet américain US-A-4 906 879 (AMP Incorporated) ;
- et la demande de brevet EP-A-0 473 336 (AMP Incorporated).

Pour placer un coupleur le long du bus, il suffit d'écarter les brins de la paire, à l'endroit d'insertion, d'ouvrir la pince formant le coupleur et de refermer le circuit magnétique de cette pince de manière à emprisonner l'un des deux brins. Celui-ci constitue alors l'enroulement primaire d'un transformateur, dont l'enroulement secondaire fait partie intégrante de la pince-coupleur.

Bien qu'apparaissant séduisante, cette méthode comporte néanmoins des inconvénients.

En premier lieu, écarter les brins de la paire crée des perturbations durables dans la zone de connexion, notamment une variation de l'impédance caractéristique.

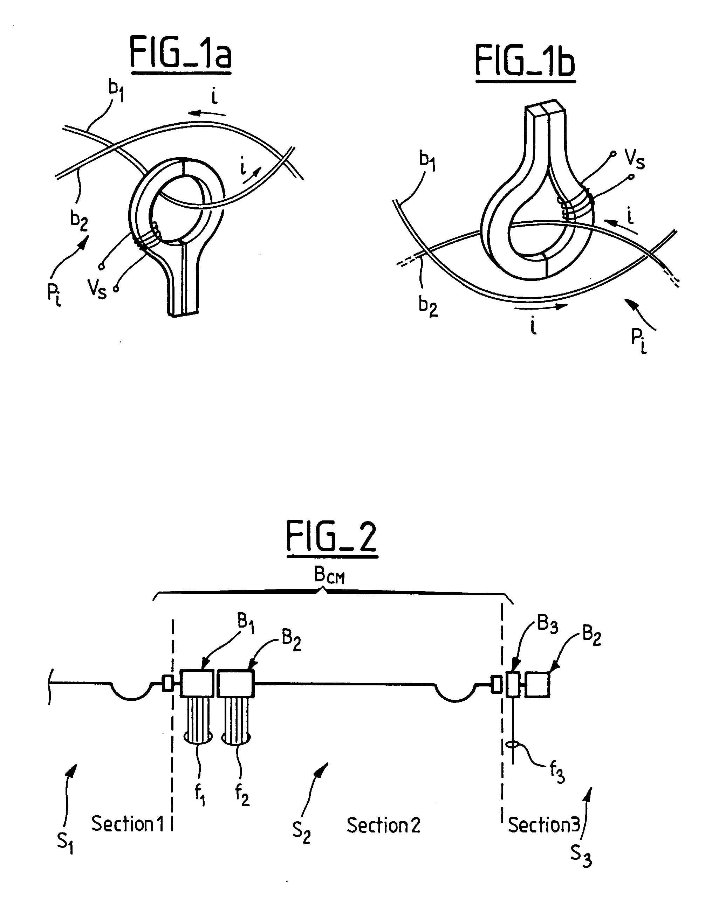

Il est nécessaire de prévoir un système d'inversion de signaux. En effet, il est difficile voire impossible de déterminer la "phase" du signal primaire. Comme le montrent les figures 1a et 1b, annexées à la présente description, la pince-coupleur Pᵢ peut entourer le brin b₁ (figure la) ou le brin b₂ (figure 1b) de la paire torsadée Pᵢ. A un instant donné, comme représenté sur ces figures, le courant i circule de la gauche vers la droite, pour le brin b₁, et de la droite vers la gauche, pour le brin b₂. Il est clair que la phase des signaux de sortie Vₛ de la pince Pᵢ sera inversée selon que celle-ci est branchée sur le brin b₁ ou le brin b₂. On doit donc prévoir des circuits électroniques permettant de gérer cet état de fait, ce qui complique les circuits d'interfaces associés au coupleur et, naturellement augmente le prix de ces circuits. En outre, toute augmentation de la complexité conduit à une dégradation de la fiabilité.

L'examen des figures des documents précités montre également que la structure de la pince-coupleur est complexe, et donc d'un prix de revient élevé.

D'autres inconvénients sont liés à la structure des coupleurs en deux parties distinctes. On ne peut pas garantir la constance des paramètres associés au circuit magnétique (perméabilité, etc.) lorsque la pince est refermée. L'impédance caractéristique du coupleur dépend de l'installateur final. Les pertes ne sont pas contrôlables (possibilités de salissures à l'entrefer) et imposent une trop grande consommation d'énergie, d'où un échauffement inutile. Cet état de fait conduit là encore à une dégradation de la fiabilité.

Il est nécessaire, le plus souvent que le bus soit blindé, ce qui entraîne une difficulté certaine pour brancher la pince-coupleur.

Enfin, l'expérience a montré, que dans la vie d'un avion, il était extrêmement rare qu'il soit nécessaire de changer la position d'un coupleur le long du bus, voire d'en rajouter.

L'invention tire avantage de cette constatation.

Elle concerne un bus à couplage magnétique mettant en oeuvre des signaux du type "doublets" impulsionnels, similaires à ceux mis en oeuvre dans les deux demandes de brevets européens précités : EP-A-0 282 101 (THE BOEING COMPANY) et européen EP-A-0 282 102 (THE BOEING COMPANY).

Elle se fixe pour but, de pallier les inconvénients des bus de l'art connu, dont certains ont été rappelés.

Selon une première caractéristique importante de l'invention, les parties "câbles" (souples) du bus sont dissociées des parties "coupleurs".

Selon une seconde caractéristique importante de l'invention, l'architecture du bus est entièrement modulaire : celui-ci comprend des tronçons de câbles souples et des modules d'interconnexion entre tronçons, sur lesquels viennent se raccorder les "abonnés" par l'intermédiaire de câbles souples supplémentaires. Les "abonnés" sont constitués physiquement par des sous-systèmes d'appareillages électroniques, ou pour le moins comportant des circuits électroniques d'interface et/ou de commande. Il peut s'agir d'appareils de mesure, de capteurs, d'actuateur, etc.

Au dernier module d'interconnexion, on associe un module de charge d'extrémité.

En réalité les modules d'interconnexion se présentent en deux parties : un module de couplage magnétique avec le bus, ne comportant que des composants passifs, et un module comprenant l'électronique d'interface nécessaire, disposé entre les câbles d'abonnés et le module de couplage magnétique.

Les modules d'interconnexion peuvent être simples (unitaires) ou multiples. Dans ce dernier cas, ils seront avantageusement standardisés. Les "abonnés" sont alors connectés, via les câbles supplémentaires, suivant des grappes.

Enfin, on peut disposer ces modules unitaires ou multiples en cascade.

L'invention a donc pour objet une architecture de bus de communication, notamment pour des applications aéroportées, le bus étant du type à couplage magnétique, comportant des organes de couplage magnétique et d'interface entre ledit bus véhiculant des signaux de données et des "abonnés" connectés à ce bus, caractérisé en ce que ledit bus est organisé en sections et comprend, en cascade, une suite de tronçons de câbles formant le bus et de blocs d'interconnexion de cesdites sections, en ce que lesdits "abonnés" sont connectés au bus via les blocs d'interconnexion et en ce que ces derniers comprennent des circuits de couplage magnétique assurant la continuité dudit bus et des circuits électroniques d'interface disposés entre les circuits de couplage magnétique et lesdits "abonnés".

On constate aisément que l'architecture selon l'invention présente de nombreux avantages.

Tout d'abord, il offre une très grande souplesse du fait de sa grande modularité.

Il permet d'abaisser les coûts de revient, grâce à la standardisation précitée.

Le fait de dissocier les parties "câbles" des parties coupleurs, permet d'obtenir, une impédance constante, strictement contrôlée en usine. De même, les parties "bloc coupleur" peuvent être à impédance variable, mais vérifiable en usine. Il s'ensuit que l'on peut réaliser des tronçons entiers pré-équipés.

On peut, enfin, blinder le bus, de bout en bout.

L'invention sera mieux comprise et d'autres caractéristiques et avantages apparaîtront à la lecture de la description qui suit en référence aux figures annexées, et parmi lesquelles :
- Les figures 1a et 1b illustrent l'implantation d'un coupleur de l'Art Connu sur un bus à paire torsadée ;
- La figure 2 illustre schématiquement l'architecture globale d'un bus à couplage magnétique selon l'invention ;
- La figure 3 illustre, en perspective, deux tronçons successifs d'un tel bus ainsi qu'un bloc d'interconnexion simple conforme à une première variante de réalisation ;
- La figure 4 illustre, en perspective, deux tronçons successifs d'un tel bus ainsi qu'un ensemble de blocs d'interconnexion simples disposés en cascade ;
- La figure 5 illustre, en perspective, deux tronçons successifs d'un tel bus ainsi qu'un bloc d'interconnexion multiple conforme à une première variante de réalisation ;
- Les figures 6a et 6b illustrent, en perspective, le module coupleur, composante du bloc d'interconnexion de la figure 5, vu de dessous et de dessus, respectivement ;
- La figure 7 illustre, en perspective, un bloc d'interconnexion multiple conforme à une seconde variante de réalisation ;
- La figure 8 illustre un exemple de dispositif de fixation des blocs d'interconnexion selon l'invention.

Dans ce qui suit, sans en limiter en quoique ce soit la portée, on se placera dans le cadre de l'application préférée de l'invention, c'est-à-dire l'avionique, sauf mention contraire.

La figure 2 illustre schématiquement l'architecture globale d'un bus à couplage magnétique B_{CM} selon l'invention.

Selon une des caractéristiques principales de l'invention, sur le bus B_{CM}, on dissocie les parties "câbles de transmission" des "parties coupleurs". Il s'ensuit que le bus B_{CM} comprend plusieurs sections en cascade, dont trois ont été représentées dans l'exemple de la figure 2 : S₁ à S₃. Chaque section S₁ à S₃ est séparée de la suivante par un bloc d'interconnexion, B₁ à B₃, couplant les câbles "d'abonnées", c'est-à-dire des sous-systèmes d'appareillage électronique, au bus B_{CM}.

En réalité, comme il a été indiqué, ces blocs, B₁ à B₃, sont divisés eux-mêmes en deux parties distinctes : un module coupleur magnétique et un module contenant l'électronique d'interface. Ils sont en outre susceptibles de plusieurs variantes de réalisation qui seront détaillées ci-après.

Dans l'exemple illustré sur la figure 2, les sections S₁ et S₂ sont interconnectées par deux blocs d'interconnexion multiples, B₁ et B₂, disposés en cascade. A ces blocs d'interconnexion, B₁ et B₂, sont raccordés, en "grappe", des "abonnées" (non représentés), par l'intermédiaire de deux faisceaux de câbles, f₁ et f₂ respectivement.

Les sections S₂ et S₃, pour leur part, sont interconnectées par bloc d'interconnexion simple B₁, la section 3 (section finale), se réduisant à un simple bloc d'impédance de charge d'extrémité B_{Z}, disposé en cascade avec le bloc d'interconnexion B₃. De même le faisceau de câbles d'abonnés f₁ se réduit à un seul câble.

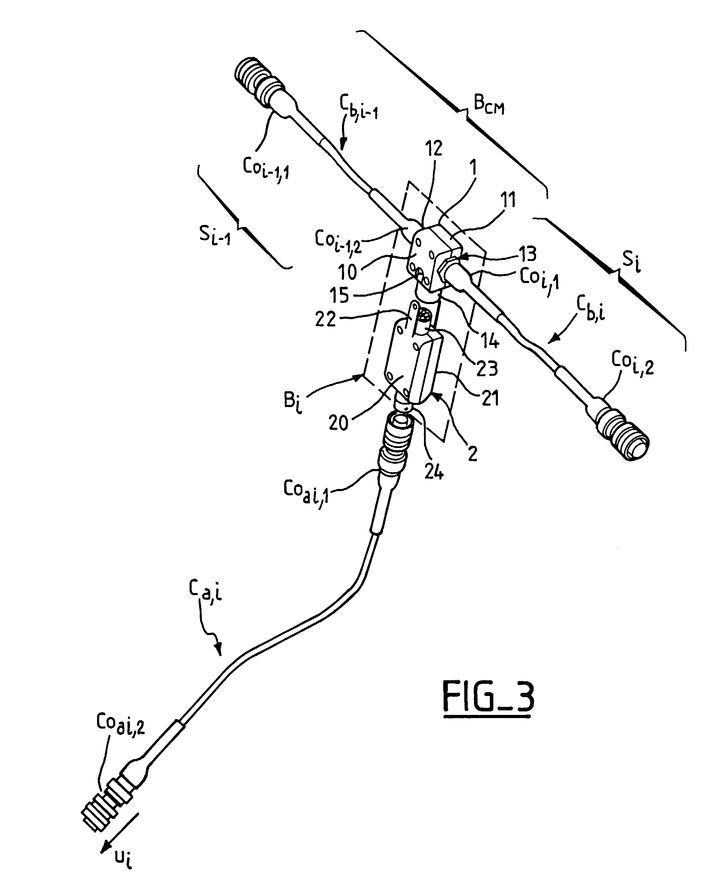

La figure 3 illustre un premier exemple de réalisation d'un bloc d'interconnexion Bᵢ, de type simple, c'est-à-dire autorisant le couplage d'un seul câble "d'abonné" Uᵢ avec le bus B_{CM}. On a représenté deux sections successives du bus B_{CM}, de rangs arbitraires Sᵢ₋₁ et Sᵢ.

Le bloc d'interconnexion Bi comprend un module de couplage magnétique 1 et un module d'interface 2.

De façon avantageuse, le module de couplage magnétique 1 ne contient que des composants passifs : essentiellement des conducteurs et des circuits magnétiques, par exemple des noyaux de ferrite (non représentés).

La configuration des circuits du coupleur proprement dit peut être diverse et ne participe pas directement à l'invention. La détermination d'un tel coupleur est à la portée de l'Homme de Métier, connaissant notamment les exigences de la norme précitées et les caractéristiques particulières à une application particulière : intensité des courants véhiculés par le bus B_{CM}, fréquence, nombre de dérivations, c'est-à-dire d'abonnés, impédance caractéristique, etc. Ils peuvent d'ailleurs être tout à fait similaires aux circuits de l'Art Connu.

Le module de couplage 1 se compose physiquement, dans l'exemple illustré, de deux demi-boitiers 10 et 11, réunis par tout moyen approprié : vis, etc. La forme globale est avantageusement parallélépipèdique rectangle, pour les raisons qui apparaîtront ci-après. Il comporte, de façon standard et symétrique, un connecteur d'entrée 12, de type femelle (dans l'exemple illustré) et un connecteur de sortie 13, de type mâle, en ce qui concerne les interconnexions avec le bus B_{CM}. De façon plus précise, les interconnexions s'effectuent, en entrée, avec le câble C_{b,1-1} de la section Sᵢ₋₁, et, en sortie, avec le câble C_{b,i} de la section Sᵢ. Il comporte, en outre, un connecteur supplémentaire 14, de type femelle (dans l'exemple illustré).

De façon avantageuse, le boîtier 1 est réalisé en matériau conducteur de l'électricité et à propriété magnétique, pour assurer, d'une part, une continuité électrique entre les entrées et les sorties, et, d'autre part, assurer une compatibilité magnétique élevée (blindage). Les connecteurs, 12 à 14, constituent pour leur part des organes de traversée de cloison.

Le module d'interface 2 se compose également, dans l'exemple illustré, de deux demi-boitiers 20 et 21, réunis par tout moyen approprié : vis, etc. La forme globale est avantageusement parallélépipèdique rectangle, comme en ce qui concerne le module 1. A l'intérieur de ce module 2, on dispose les circuits électroniques (non représentés) nécessaires à la détection, via le module coupleur magnétique 1, des signaux véhiculés sur le bus B_{CM} et à leur conversion, sous une forme appropriée en signaux transmis sur le câble C_{a,i} "d'abonnés" Uᵢ. Naturellement, ces circuits assurent la conversion inverse, si le couplage est bidirectionnel. Comme les circuits du coupleur, ces circuits ne participent pas directement à l'invention. Leur détermination est à la portée de l'Homme de Métier. Ils peuvent être d'ailleurs tout à fait similaires aux circuits de l'Art Connu, notamment à ceux décrits dans les demandes de brevet européen précitées.

Le module 2 comprend également un connecteur d'entrée 23 (mâle dans l'exemple illustré), destiné à se coupler sur le connecteur 14 du module 1. Les signaux de sortie, délivrés par les circuits de couplage magnétique, c'est-à-dire des signaux similaires aux signaux V_{S} de la figure 1, sont transmis sur des éléments contacts appropriés du connecteur 14 et servent de signaux d'entrée pour les circuits électroniques du module 2, lorsque celui-ci est couplé. Comme il a été indiqué précédemment, la liaison inverse (couplage bidirectionnel) peut aussi être assurée par ces circuits.

Les deux demi-boitiers, 20 et 21, constituant le module 2, comportent avantageusement, chacun, des pattes de fixation 22 permettant l'accrochage du module 2 sur le module 1, lorsque les connecteurs 13 et 14 sont accouplés. A cette fin, le module 1 comportent également des organes 15 permettant cette fixation, par exemple des trous filetés. Naturellement cette disposition pourrait être inversée, le boîtier 1 portant les pattes de fixation.

Le module 2 comporte enfin un connecteur 24, destiné à être couplé au câble C_{a,i} "d'abonné" Uᵢ.

La séparation en deux modules est avantageuse à plusieurs titres.

Les éléments passifs sont en général des éléments très fiables et peuvent être entièrement standardisés, d'un module de couplage magnétique à l'autre. Le module de couplage magnétique 1, comme décrit ci-après peut être rendu fixe et monté à demeure.

Le module d'interface 2, comportant des éléments actifs, notamment des circuits intégrés, peut être spécifique aux besoins d'un "client" Uᵢ. A titre d'exemple, il peut assurer des conversions bidirectionnelles des signaux ou, au contraire, des conversions monodirectionnelles, dans un sens ou dans un autre ("abonné" Uᵢ vers bus B_{CM} ou l'inverse). On prévoit avantageusement un couvercle ou les deux demi-boitiers démontables, permettant ainsi un accès à l'électronique interne.

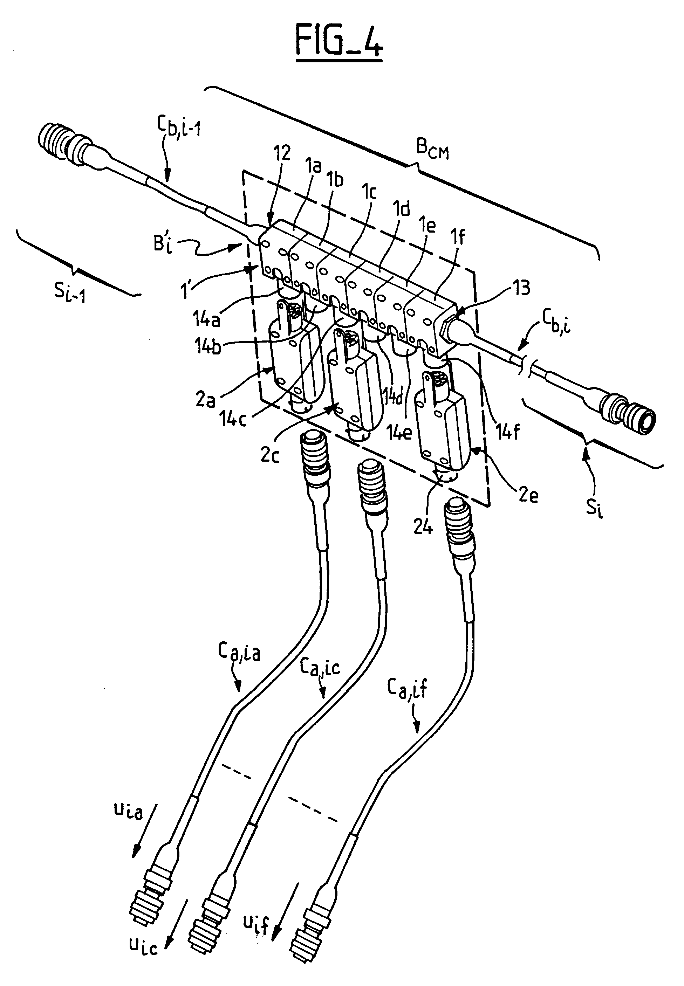

La figure 4 illustre, en perspective, deux tronçons successifs d'un bus B_{CM} ainsi qu'un ensemble composite B'ᵢ, jouant le rôle d'un bloc d'interconnexion multiple entre le bus B_{CM}, d'une part, et plusieurs abonnées, d'autre part.

Sur cette figure, on n'a repéré que les éléments essentiels à la bonne compréhension de l'invention, étant entendu que les éléments de détail sont identiques à ceux précédemment décrits, aux exceptions signalées prés.

Comme dans le cas d'un bloc d'interconnexion simple, le bloc composite B'ᵢ est constitué de deux modules distincts, ou plus précisément de deux séries de modules : des modules de couplage magnétiques, similaires chacun à ceux précédemment décrits, repérés 1ₐ à 1_{f}, et disposés en cascade. La combinaison des modules en cascade constitue un boîtier monobloc.

Fonctionnellement, chaque module, 1ₐ à 1_{f}, est strictement identique au module 1 de la figure 3. La seule différence notable entre ces derniers modules et le module 1, est que seuls les modules latéraux, 1ₐ et 1_{f}, sont munis de connecteurs, 12 et 13, destinés à assurer le couplage avec les câbles, C_{b,1-1} et C_{b,i} respectivement, du bus B_{CM}. Par contre, tous les modules, 1ₐ à 1_{f}, sont munis d'un connecteur, 14ₐ à 14_{f}, pour le couplage avec les câbles "d'abonnés", via des modules d'interface, 2ₐ à 2_{f}, respectivement. Dans l'exemple illustré, pour ne pas surcharger la figure, seulement trois modules d'interface 2ₐ, 2_{c} et 2_{f} et trois câbles d'abonnés, Co_{a,ia}, Co_{a,ic} et Co_{a,if}, respectivement, ont été représentés. Ces câbles, C_{a,ia}, C_{a,ic} et C_{a,if}, desservent les abonnées Uᵢₐ, U_{ic} et U_{if}.

Les modules d'interfaces, 2ₐ à 2_{f}, peuvent être tous identiques entre eux et identiques, structurellement et fonctionnellement, au module 2 de la figure 3. Naturellement, comme il a été indiqué, la possibilité d'adapter chaque module d'interface aux particularités de l'usager desservi reste intacte.

De façon avantageuse, les modules de couplage magnétique 1', intercalés sur le bus B_{CM} sont standardisés et comprennent, par exemple 6 ou 12 modules élémentaires. Le bloc B'ᵢ comprend six modules dans l'exemple illustré. Les "abonnés", Uᵢₐ à U_{if}, sont donc connectés, en "grappe", à ce bloc d'interconnexion B'ᵢ. Il n'est d'ailleurs pas nécessaire que le nombre "d'abonnés" soit égal au nombre maximum de connexion possible, soit six, dans l'exemple illustré. Les câbles "d'abonnés" et les modules d'interface peuvent être rattachés à n'importe quel connecteur 14ₐ à 14_{f}, si les modules sont tous identiques. En ce qui concerne l'aspect structurel, les dimensions des boîtiers sont avantageusement identiques et déterminées de façon appropriée pour qu'ils puissent être disposés, l'un à côté de l'autre, sans gêner la connexion du module adjacent. A cet égard, une forme parallélépipédique rectangle apparaît optimisée. De façon classique en soi, s'il existe différents types de module d'interface, d'un point de vue fonctionnel, il suffit de prévoir un marquage ou une couleur différente, par exemple.

Dans les deux exemples de réalisations qui viennent d'être décrits, tous les connecteurs sont avantageusement de type circulaire, à vis ou à baïonnette. Si on se reporte de nouveau à la figure 3, cette disposition permet d'assurer un blindage de bout en bout (continuité) et une impédance contrôlée, entre les différents tronçons, Sᵢ₋₁ et Sᵢ, du bus B_{CM}, d'une part, et entre ce bus et les interfaces "d'abonnés" Uᵢ (non représentés).

Les câbles de bus C_{b,i-1} et C_{b,i} sont des câbles bifilaires blindés. Les câbles d'abonnés sont avantageusement des câbles blindés à quatre conducteurs.

Chaque câble, C_{b,i-1} et C_{b,i}, comprend un connecteur "d'entrée" Coᵢ₋ _{1,1} et Co_{i,1}, et un connecteur de "sortie", Co_{i-1,2} et Co_{i,2}, respectivement. Ces connecteurs sont, alternativement, mâles et femelles, ou au contraire, d'un même type sur un tronçon de câble. Les connecteurs, 12 et 13, sur les modules de couplage magnétique 1, sont naturellement appariés à ces connecteurs. De même, les câbles d'abonnés sont munis d'une paire de connecteurs similaires, repérés Co_{ai,1} et Co_{ai,2}. Les câbles sont protégés par des gaines, avantageusement de type thermoplastique, qui se prolongent par des manchons recouvrant l'arrière des connecteurs. Généralement, le blindage est assuré par une tresse. On prévoit une reprise de tresse sur le corps du connecteur pour assurer la continuité électrique de masse précitée.

Les boîtiers des modules 1 et 2 sont réalisés, soit en métal, soit en matière plastique thermomoulée et métallisée, pour assurer la continuité électrique de masse et le blindage précités.

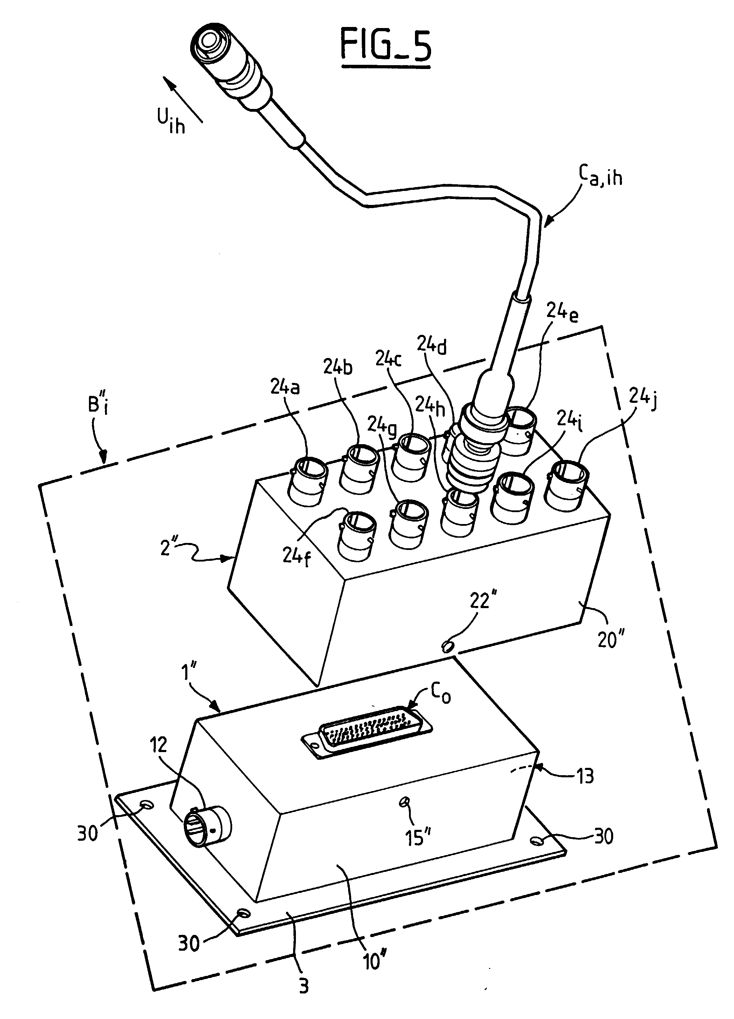

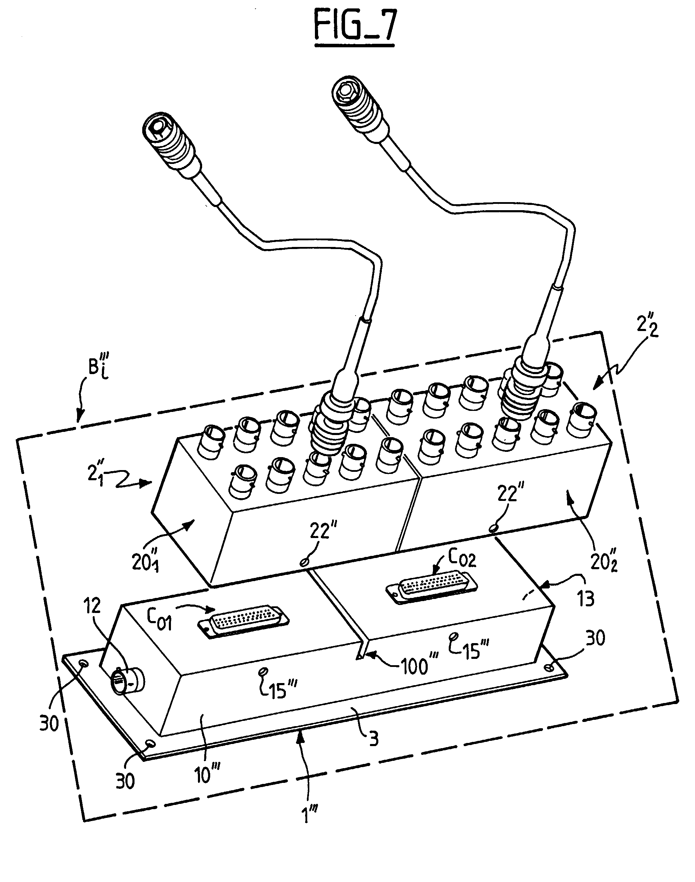

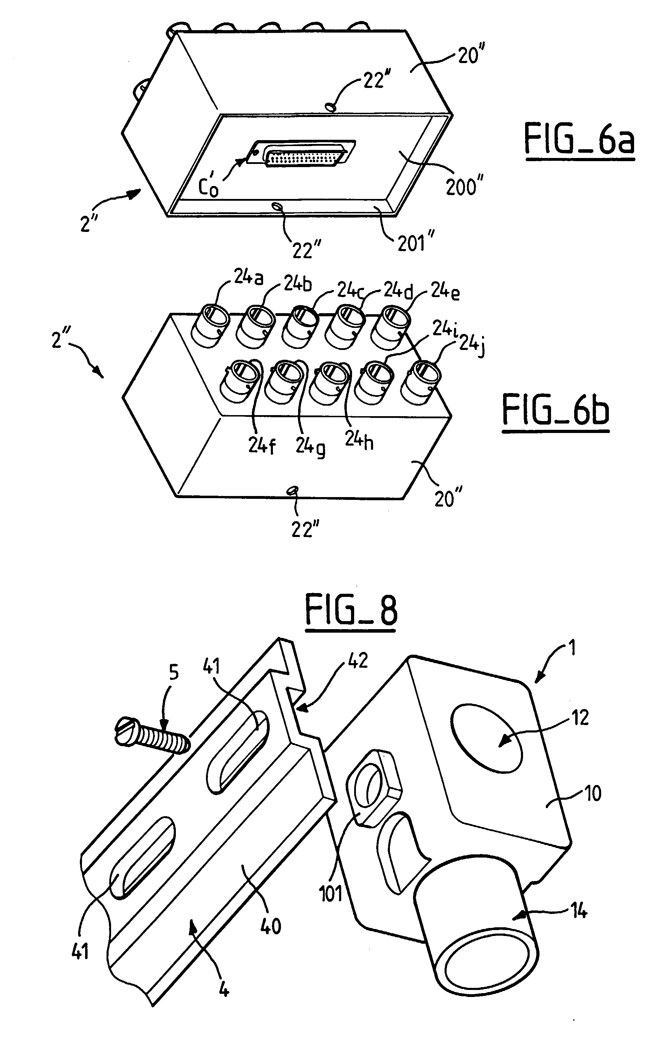

Un second mode de réalisation de bloc d'interconnexion multiple va être décrit en regard des figures 5, 6a et 6b.

Le bloc B"ᵢ représenté sur la figure 5, en perspective, vu de haut, comporte comme précédemment deux parties : un module de couplage magnétique 1", constitué de composants passifs, et un module d'interface 2", incluant les composants actifs (électronique d'interface).

La différence essentielle avec le mode de réalisation des figures 3 et 4 est que les deux modules sont constitués par des boîtiers monoblocs.

Le boîtier 10" du module de couplage magnétique est fixé avantageusement sur un support plan 3 comportant des moyens de fixations 30 (par exemple des trous de fixation par un système classique vis-écrous non représenté) à une structure non représentée sur cette figure.

Une autre différence importante est constituée par le fait que les connecteurs de couplage avec le module d'interface 2" sont remplacés par un connecteur unique Cₒ rectangulaire multicontacts, similaire aux connecteurs de type "port parallèle" ou "RS232" utilisés en informatique. Ce connecteur Cₒ comporte, de façon classique, une embase et une jupe métallique entourant les éléments de contacts d'entrée-sortie des signaux et formant blindage. La continuité électrique de masse peut être assurée par un des éléments de contact électrique.

Les connecteurs, 12 et 13 (ce dernier étant non visible sur la figure) de couplage avec le bus B_{CM} (figures 3 et 4) sont du même type que précédemment, c'est-à-dire du type circulaire.

Les figures 6a et 6b représentent, en perspective, le boîtier 20" formant le module d'interface 2", vu de dessous et de dessus, respectivement.

Le couplage avec les câbles "d'abonnés" Uᵢₕ, dont un seul, C_{a,ih} a été représenté pour simplifier la figure, est assuré par des connecteurs circulaires, 24ₐ à 24ⱼ, comme précédemment. La différence essentielle est que les connecteurs de couplage avec le module coupleur magnétique sont remplacés par un connecteur unique C'ₒ, naturellement apparié avec le connecteur Cₒ, pour permettre l'enfichage des connecteurs, l'un dans l'autre.

Avantageusement, les parois 201" débordent du plan inférieur 200" ou fond du boîtier 20", et forment une jupe permettant l'emboîtage du boîtier 20" sur le boîtier 10". Les dimensions des deux boîtiers sont déterminées de façon appropriée pour permettre un emboîtage à bords jointifs. Des moyens de fixation, 22" sur le boîtier 20" et 15" sur le boîtier 10", complètent l'ensemble. Ils jouent un rôle similaire aux moyens de fixation 15 et 22 (figure 3). Il peut s'agir simplement d'orifices permettant une fixation classique du type vis-écrou.

L'ensemble qui vient d'être décrit permet donc de desservir un maximum de *n* "usagers", en l'occurrence dix usagers dans l'exemple illustré.

A priori, le module de couplage magnétique 10" est fixé à demeure. Seuls, le module d'interface 20" et/ou les câbles C_{a,ih} "d'abonnés" Uᵢₕ sont déconnectables.

Selon une première variante, toutes les entrées-sorties (connecteurs 24a à 24j) sont identiques fonctionnellement. Les câbles C_{a,ih} peuvent alors être raccordés, de façon arbitraire, sur n'importe quel connecteur. Selon une seconde variante, l'électronique interne assure des interfaces spécialisées particulières à chaque utilisateur. Il est alors nécessaire de prévoir un système de détrompage ou d'indexage, pour le moins de marquage sans ambiguïté, ce qui complique la réalisation matérielle. L'aspect modulaire (standardisation) en est également amoindri, au profit cependant d'une plus grande souplesse fonctionnelle.

La figure 7 illustre une variante de ce mode de réalisation. Le bloc d'interconnexion B"'ᵢ est toujours constitué de deux parties, cependant le module de couplage magnétique 1"' est constitué d'un boîtier double 10"' et comporte deux connecteurs rectangulaires, Cₒ₁ et Cₒ₂. Cette disposition permet d'enficher deux modules d'interface, 2"₁ et 2"₂, structurellement identiques au module 2" des figures 5, 6a et 6b.

Pour autoriser l'emboîtage des deux modules d'interface, 2"'₁ et 2"'₂, et pour ne mettre en oeuvre qu'un modèle de boîtier, on prévoit une rainure centrale 100"' de largeur et de profondeur suffisante pour autoriser l'insertion simultanée des deux jupes inférieures (figure 6a : 201") des boîtiers des modules 2"₁ et 2"₂.

Cette variante de réalisation permet de desservir 2×*n* "abonnés", soit vingt "abonnés" dans l'exemple illustré. On peut naturellement prévoir des modules de couplage triple, quadruple, voire d'ordre plus élevé.

Comme précédemment, le module de couplage magnétique 1"' repose sur un support plan 3, autorisant son montage sur une structure externe (non représentée). On munit également le boîtier 10"' de moyens de fixation 15"' pour le couplage mécanique aux boîtiers 20"₁ et 20"₂ (moyens de fixation 22").

On va maintenant décrire, par référence à la figure 8, un d'agencement permettant la fixation à demeure des modules de couplage magnétique, par exemple dans les superstructures d'un avion. Dans l'exemple illustré sur cette figure, on suppose que le module de couplage magnétique est du type décrit en regard de la figure 3. Ce type de fixation convient également, par extension, au module de couplage multiple décrit en regard de la figure 4.

Le dispositif comprend essentiellement un rail 4, du type profilé, comprenant un corps allongé 40. Celui-ci est muni de lumières allongées 41 régulièrement réparties sur sa longueur et une rainure 42 longitudinale.

Les boîtiers 10 des coupleurs magnétiques 1 sont munis, sur une de leurs faces, d'un écrou soudé 101, ou d'un organe équivalent : trou taraudé, etc., dont les dimensions sont adaptées à la profondeur et à la largeur de la rainure 42 précitée. Par cette disposition, l'écrou 101 peut être introduit dans la rainure 42, ce qui autorise la translation du module de couplage magnétique 1 le long du rail formant glissière et sa fixation dans une zone désirée. Il suffit, pour ce faire, d'utiliser une vis 5 introduite dans l'un des orifices 41 et bloquant, par vissage, le module de couplage magnétique 1 dans la position désirée.

Les modules de couplage selon la seconde variante d'exécution (figure 5 à 7) sont avantageusement montés sur un support plan 3 permettant un vissage immédiat sur une structure externe (non représentée). Dans une variante de montage non représentée, on peut également fixer ces supports sur deux rails, similaires au rail 4 de la figure 8, disposés parallèlement, à une distance en adéquation avec l'écartement des trous 30 des plaques 3. La fixation peut alors être réalisée classiquement par des jeux de vis et d'écrous.

De façon préférentielle, ces structures de montages sont mises au potentiel de la masse.

Pour tous les modes de réalisation décrits, il y lieu de compléter le bus B_{CM}, dans sa dernière section, par un module de charge d'extrémité B_{z}, comme illustré par la figure 2. Ce module est unique pour tout le bus B_{CM} et spécifique à celui-ci. Il referme le bus sur une impédance déterminée. Structurellement, il peut être réalisé sous la forme d'un boîtier similaire au boîtier 10 du module de couplage magnétique 1 selon la figure 3. Il se raccorde au connecteur 13 du dernier module de couplage magnétique du bus B_{CM}, que ce soit un module coupleur simple comme illustré par la figure 2 (appartenant au bloc d'interconnexion B3, dans l'exemple illustré sur cette figure) ou à un module coupleur multiple, tel que ceux représentés sur les figures 4 à 7.

Typiquement, l'impédance caractéristique des bus du type décrit est d'environ 130 Ω. Selon les applications, la charge d'extrémité sera adaptée ou désadaptée et fixée à une valeur prédéterminée par le calcul ou l'expérimentation (fruit d'une simulation, par exemple).

A la lecture de la description qui précède, on constate aisément que l'invention atteint bien les buts qu'elle s'était fixés.

Le fait de dissocier les parties "câbles" de parties "coupleurs" permet de contrôler strictement l'impédance des câbles au stade de la fabrication. Les "blocs coupleurs", réalisés eux-mêmes en deux parties peuvent également être pré-équipés et vérifiés en usine. En outre, les modules d'interface peuvent être adaptés aux besoins spécifiques des différents "abonnés" à connecter au bus.

Elle permet aussi une très grande modularité et une très grande standardisation des composants du bus. Ceux-ci se réduisent à un petit nombre de composants distincts : tronçons de câble constituant le bus et utilisés pour le raccordement des "abonnés", modules simples ou multiples de couplage magnétique et d'interface (eux-mêmes standardisables), selon deux modes principaux de réalisation, et un module unique de charge d'extrémité de bus.

Il doit être clair que l'invention n'est pas limitée aux seuls exemples de réalisations précisément décrits, notamment en relation avec les figures 2 à 8.

Notamment, les précisions relatives au nombre d'abonnés connectés aux blocs d'interconnexion multiple, le nombre de sections du bus, les impédances caractéristiques de celui-ci ou la nature des matériaux utilisés, n'ont été données que pour mieux fixer les idées et ne sauraient limiter en quoique ce soit la portée de l'invention.

Il doit être clair aussi que, bien que particulièrement adaptée aux applications du domaine de l'avionique ou de l'aérospatial, on ne saurait cantonner l'invention à ce seul type d'applications.

## Revendications

1. Architecture de bus de communication, notamment pour des applications aéroportées, le bus (B_{CM}) étant du type à couplage magnétique, comportant des organes de couplage magnétique et d'interface entre ledit bus (B_{CM}) véhiculant des signaux de données et des "abonnés" (Uᵢ) connectés à ce bus, caractérisé en ce que ledit bus est organisé en sections (S₁ à S₃) et comprend, en cascade, une suite de tronçons de câbles (C_{b,i-1}, C_{b,i}) formant le bus (B_{CM}) et de blocs d'interconnexion (Bᵢ) de cesdites sections, en ce que lesdits "abonnés" (Ui) sont connectés au bus (B_{CM}) via les blocs d'interconnexion (Bᵢ) et en ce que ces derniers comprennent des circuits de couplage magnétique (1) assurant la continuité dudit bus (B_{CM}) et des circuits électroniques d'interface (2) disposés entre les circuits de couplage magnétique et lesdits "abonnés" (Uᵢ).

2. Architecture selon la revendication 1, caractérisé en ce que les "abonnés" (Uᵢ) sont connectés auxdits blocs d'interconnexion (Bᵢ) par l'intermédiaire de câbles supplémentaires (C_{a,i}).

3. Architecture selon les revendications 1 ou 2, caractérisé en ce que lesdits blocs d'interconnexion (Bᵢ) sont constitués d'un premier module (1) constitué desdits circuits de couplage magnétique et d'un second module (2) constitué desdits circuits électroniques d'interface, et en ce que ces deux modules (1, 2) sont interconnectés électriquement à l'aide de premiers connecteurs (14, 23), de manière à coupler magnétiquement lesdits "abonnés" (Uᵢ) audit câble (B_{CM}).

4. Architecture selon la revendication 3, caractérisé en ce que lesdits câbles (C_{b,i-1}, C_{b,i}) formant le bus (B_{CM}) sont munis à leurs extrémités de connecteurs (Co_{i-1,1}, Co_{i-1,2}, Co_{i,1}, Co_{i,2}), en ce que ledit premier module (1) comporte des deuxième (12) et troisième (13) connecteurs destinés à interconnecter électriquement ce module (1) auxdits câbles (C_{b,i-1}, C_{b,i}) formant le bus (B_{CM}), par l'intermédiaire des connecteurs d'extrémité (Co_{i-1,1}, Co_{i-1,2}, Co_{i,1}, Co_{i,2}).

5. Architecture selon la revendication 3, caractérisé en ce que lesdits câbles supplémentaires (C_{a,i}) de connexion aux abonnés (Uᵢ) sont munis à leurs extrémités de connecteurs (Coₐ₁, Co_{ai,2}), en ce que ledit second module (2) comporte un connecteur supplémentaire destiné à interconnecter électriquement ce module (2) auxdits câbles supplémentaires(C_{a,i}).

6. Architecture selon les revendications 4 ou 5, caractérisé en ce que lesdits premier (1) et second (2) modules sont constitués de boîtiers (10, 20) sensiblement parallélépipèdiques rectangles et en ce que des boîtiers (10, 20) sont munis de moyens complémentaires d'accrochage (15, 22), de l'un sur l'autre.

7. Architecture selon la revendication 6, caractérisé en ce que ledit premier module (1') est constitué d'une suite de boîtiers élémentaires en cascade (1ₐ à 1_{f}) formant un module coupleur magnétique multiple, de manière à coupler magnétiquement plusieurs "abonnés" audit bus (B_{CM}), en ce que les boîtiers latéraux (1ₐ et 1_{f}) sont seuls munis desdits deuxième (12) et troisième connecteurs (13) pour l'interconnexion de ce module de couplage magnétique multiple (1') audit bus (B_{CM}), et en ce que chacun des boîtiers élémentaires (1ₐ à 1_{f}) est muni d'un dit connecteur supplémentaire (14ₐ à 14_{f}) permettant l'interconnexion électrique, chacun, avec un module d'interface élémentaire (2ₐ à 2_{f}) et le couplage avec un nombre égal "d'abonnés" (Uᵢₐ, U_{ic}, U_{if}) via un desdits câbles supplémentaires (C_{a,ia}, C_{a,ic}, C_{a,if}).

8. Architecture selon l'une quelconque des revendications 4 à 7, caractérisé en ce que les connecteurs (12, 13, 14, 23, 24) desdits premier (1) et second (2) modules, ainsi que les connecteurs (Co_{i-1,1}, Co_{i-1,2}, Co_{i,1}, Co_{i,2}, Co_{ai,1}, Co_{ai,2}) desdits câbles (C_{b,i-1}, C_{b,i}) formant le bus (B_{CM}) et desdits câbles supplémentaires (C_{a,i}), sont des connecteurs de type circulaire, en ce que les câbles sont pourvus d'un blindage et en ce que lesdits connecteurs assurent la continuité électrique dudit blindage.

9. Architecture selon l'une quelconque des revendications 6 à 8, caractérisé en ce qu'il est prévu des moyens de fixation (5, 101) des boîtiers (10) desdits premiers modules (1) en une zone déterminée d'un rail (4) formant glissière (42).

10. Architecture selon les revendications 4 ou 5, caractérisé en ce que ledit bloc d'interconnexion (B"ᵢ) comprend un premier boîtier monobloc(10") constituant un module coupleur magnétique multiple (1"), muni desdits deuxième (12) et troisième connecteurs (13) pour l'interconnexion électrique avec ledit bus (B_{CM}), et au moins un second boîtier monobloc (20") constituant un module de circuits électroniques d'interface multiple (2"), muni d'une pluralité de connecteurs de type circulaires (24ₐ à 24ⱼ) à chacun desquels est interconnecté électriquement un "abonné" particulier (Uᵢₕ) via un desdits câbles supplémentaires, en ce que ledit premier boitier (10") est muni d'au moins un connecteur rectangulaire multicontact (Cₒ) et ledit second boitier (20") est muni d'un connecteur rectangulaire multicontacts complémentaire (C'ₒ), ces connecteurs (Cₒ, Cₒ') autorisant l'interconnexion électrique de ces premier (1") et second (2") boitiers par enfichage.

11. Architecture selon la revendication 10, caractérisé en ce que lesdits premier (10") et second (20") boîtiers monoblocs sont de forme sensiblement parallélépipèdique et en ce qu'ils sont munis de moyens complémentaires d'accrochage (15", 22", 201"), permettant l'emboîtage de l'un sur l'autre, lesdits connecteurs rectangulaires multicontacts complémentaires (Cₒ, C'ₒ) étant disposés sur des parois en vis à vis des premier (10") et second (20") boîtiers à enficher l'un sur l'autre.

12. Architecture selon la revendication 11, caractérisé en ce qu'en outre les connecteurs desdits câbles formant le bus (B_{CM}) et desdits câbles supplémentaires (C_{a,ih}), sont des connecteurs de type circulaire, en ce que les câbles sont pourvus d'un blindage et en ce que lesdits connecteurs assurent la continuité électrique dudit blindage.

13. Architecture selon la revendication 11, caractérisé en ce que ledit premier boîtier monobloc (10"') constituant un module coupleur magnétique multiple (1"') est subdivisé en au moins deux sous-ensembles, en ce que chaque sous-ensemble comporte un connecteur rectangulaire multicontacts (Cₒ₁, Cₒ₂) et en ce qu'il est doté de rainures transversales (100"') délimitant deux sous-ensembles adjacents de manière à autoriser l'enfichage et l'emboîtement, côte à côte, de boîtiers monoblocs (20") constituant lesdits modules de circuits électroniques d'interface multiple (2"), un boîtier monobloc (20") pouvant être emboîté sur chacun desdits sous-ensembles.

14. Architecture selon l'une quelconque des revendications 11 à 13, caractérisé en ce que le premier boîtier (10", 10"') constituant ledit module coupleur magnétique multiple (1", 1"') est muni d'un support plan (3) et en ce que ce support plan est muni de moyens de fixation (30) à une structure externe.

15. Architecture selon l'une quelconque des revendications précédentes, caractérisé en ce que la dernière section (S₃) constituant ledit bus (B_{CM}) comprend un module supplémentaire (B_{Z}) formant impédance de charge et en ce que ce module est connecté en aval du dernier desdits blocs d'interconnexion (B₃), de manière à fermer ledit bus (B_{CM}) sur ladite impédance.

16. Architecture selon l'une quelconque des revendications précédentes, caractérisé en ce que lesdits boîtiers (10 à 10"', 20 à 20"') constituant les modules (1 à 1"', 2 à 2"') sont réalisés par moulage thermoplastique et métallisation pour assurer une conduction électrique.
